(19) **Europäisches Patentamt**

**European Patent Office**

**Office européen des brevets**

(11) **EP 0 796 404 B1**

(12) **FASCICULE DE BREVET EUROPEEN**

(45) Date de publication et mention
de la délivrance du brevet:
**07.10.1998 Bulletin 1998/41**

(51) Int Cl.⁶: **F16L 11/08**

(86) Numéro de dépôt international:
**PCT/FR95/01601**

(21) Numéro de dépôt: **95941766.8**

(22) Date de dépôt: **05.12.1995**

(87) Numéro de publication internationale:
**WO 96/18060 (13.06.1996 Gazette 1996/27)**

(54) **CONDUITE TUBULAIRE FLEXIBLE COMPORTANT UNE NAPPE D'ARMURE AGRAFEE**

**FLEXIBLE ROHRLEITUNG MIT EINER GEHEFTETEN VERSTÄRKUNGSLAGE**

**FLEXIBLE TUBULAR PIPE COMPRISING AN INTERLOCKED ARMOURING WEB**

(84) Etats contractants désignés:
**BE DK ES FR GB IE NL**

(30) Priorité: **05.12.1994 FR 9414600**

(43) Date de publication de la demande:
**24.09.1997 Bulletin 1997/39**

(73) Titulaire: **COFLEXIP**
**75116 Paris (FR)**

(72) Inventeurs:
- **MALLEN-HERRERO, José**
  **F-75008 Paris (FR)**

- **ESTRIER, Pascal**
  **F-76490 Saint-Wandrille-Rançon (FR)**
- **VINCENT, Anne**
  **F-76480 Duclair (FR)**

(74) Mandataire: **Levy, David et al**
**c/o S.A. Fédit-Loriot**
**38, avenue Hoche**
**75008 Paris (FR)**

(56) Documents cités:
**WO-A-91/00467**          **WO-A-92/00481**
**DE-C- 4 303 508**        **FR-A- 1 346 924**
**FR-A- 1 483 914**        **FR-A- 2 217 621**
**FR-A- 2 561 745**

## Description

La présente invention est relative à une conduite tubulaire flexible utilisable en particulier pour le transport de fluides sous pression, notamment des hydrocarbures produits par exploitation de puits sous-marins.

La société déposante fabrique et commercialise en grande longueur divers types de telles conduites qui présentent des caractéristiques mécaniques élevées, notamment de résistance à la traction, à l'écrasement et à la pression interne du fluide transporté ainsi qu'aux effets de torsion.

Ainsi, la société déposante fabrique et commercialise des conduites destinées à résister à des pressions élevées, supérieures à 100 bars et pouvant atteindre 500 à 1000 bars, et comportant une gaine interne d'étanchéité, une armure dite de traction et constituée par au moins deux nappes croisées de fils présentant une section de forme simple, généralement rectangulaire ou circulaire et, entre la gaine interne d'étanchéité et l'armure de traction, une armure de résistance à la pression, dite voûte de pression, et comportant une ou plusieurs nappes de fils métalliques enroulés par spiralage sous un angle proche de 90° par rapport à l'axe de la conduite tubulaire flexible, l'armure de traction étant recouverte par une gaine externe de protection.

Dans la pratique, l'angle de spiralage de la voûte de pression est supérieur à 80° par rapport à l'axe de la conduite tubulaire flexible afin de conférer à la voûte une résistance maximale à la composante circonférentielle (hoop stress) des efforts engendrés par la pression intérieure dans la conduite.

Différentes configurations de telles voûtes de pression ont déjà été décrites en particulier dans le document WO-91/00467.

On trouve notamment dans ce document antérieur une configuration de voûte de pression constituée par l'enroulement en hélice d'au moins une paire de fils profilés métalliques agrafables, l'un des fils profilés présentant une section dite en T, l'autre fil profilé présentant une section dite en U, les fils étant agencés et dimensionnés pour, lors de leur enroulement, assurer un agrafage latéral des spires, c'est-à-dire une limitation de l'écartement latéral des spires dans le sens de l'axe de la conduite tubulaire flexible.

Un fil profilé de section en T peut se définir comme présentant une partie de base munie à ses extrémités latérales de nervures en relief de la partie de base, le profilé présentant en outre une nervure centrale en relief de la partie de base et dont le sommet se trouve à une plus grande distance par rapport à la partie de base que les sommets des nervures latérales.

Le fil profilé en forme de U comporte pour sa part une partie de base munie à ses extrémités latérales de nervures en relief par rapport à la partie de base.

Dans les configurations connues du document antérieur mentionné ci-dessus dans lequel la voûte de pression est réalisée par spiralage et agrafage de fils profilés présentant, l'un une section en T, et l'autre une section en U, le fil profilé en U présente une section et une épaisseur importante.

Selon ce document antérieur, le fil profilé en U peut être disposé soit avec ses nervures tournées vers l'extérieur soit avec ses nervures tournées vers l'intérieur.

Suite à ses travaux, la société déposante a trouvé, d'abord, que, pour les applications dynamiques, c'est-à-dire lorsque la conduite flexible est soumise à des déformations en flexion alternées, une telle conduite flexible présente des performances très décevantes si elle comporte une voûte de pression constituée par une nappe interne de fil profilé en U et une nappe externe de fil profilé en T, le fil profilé en U présentant alors des nervures tournées vers l'extérieur. On a constaté en effet que, dans la pratique, il existe toujours, à l'état assemblé de la conduite, un contact entre les fils profilés en T et en U constituant la voûte de pression et ce, pendant toute la durée d'utilisation, les efforts d'appui mutuel des parties en relief des fils profilés étant importants.

On constate qu'à l'usage, les frottements engendrés par ces contacts, liés aux efforts d'appui importants, entraînent une réduction de durée de vie par suite de phénomènes de fissuration des fils profilés et de réduction de leur section.

Ayant ainsi choisi de réaliser la nappe interne avec le fil profilé en T, les nervures du fil profilé en U étant tournées vers l'intérieur, il a été trouvé qu'il n'est pratiquement pas possible d'empêcher qu'il y ait contact radial entre le fil profilé en T et le fil profilé en U et qu'il y ait une participation significative du fil profilé en U à la résistance à la composante circonférentielle des efforts de pression. Dans ces conditions, les efforts d'appui entre le fil profilé en T et le fil profilé en U risquent de rester excessivement importants.

Un premier prototype a été réalisé avec les nervures du fil profilé en U tournées vers l'intérieur et des caractéristiques dimensionnelles modifiées des fils profilés en T et en U. L'essai en fatigue du prototype, dans des conditions dynamiques et sous pression, s'est achevé prématurément par suite de la rupture du fil profilé en U.

La présente invention repose, en particulier, sur la découverte, faite lors de l'étude consécutive à cette rupture du fil profilé en U, que le fil profilé en U est soumis à des moments de flexion plus ou moins importants provoqués par les forces de frottements qui sont associées aux efforts d'appui radial entre le fil profilé en T et le fil profilé en U.

La présente invention se propose de réaliser une conduite tubulaire flexible comportant une voûte de presion comportant un fil profilé en T et un fil profilé en U qui ne présente notamment pas les inconvénients des structures connues du même type.

Selon la présente invention, il est prévu que les nervures du fil profilé en T étant orientées vers l'extérieur de la conduite tubulaire flexible, les nervures du fil profilé en U étant orientées en direction de l'axe de la conduite tubulaire flexible, que l'aire de la section droite du fil profilé en T soit sensiblement supérieure à l'aire de la section droite du fil profilé en U, et que, dans chaque zone d'agrafage latéral constituée, d'une part, par une nervure latérale du fil profilé en U engagée dans une gorge latérale du fil profilé en T, et, d'autre part, par une nervure latérale du fil profilé en T en regard de la partie de base du fil profilé en U et entre les deux nervures de ce fil profilé en U, il y ait à la fois contact entre la nervure latérale d'un premier des deux fils profilés et le second fil profilé, et un jeu radial entre la nervure latérale du second fil profilé et le premier fil profilé.

De préférence, ledit premier fil profilé est le fil profilé en T, les deux nervures latérales de ce fil profilé étant en contact avec la surface en regard de la partie de base du fil profilé en U qui constitue le fond élargi, et de préférence plat, de la gorge située entre les nervures latérales de ce fil profilé en U, et les deux nervures latérales du fil profilé en U étant à distance, avec un certain jeu radial, par rapport aux gorges correspondantes du fil profilé en T.

Le rapport desdites aires des sections droites des fils profilés respectivement en T et en U est avantageusement supérieur ou égal à 2 et de préférence supérieur ou égal à 3. Dans le cas avantageux des fils en acier, des résultats particulièrement intéressants ont été obtenus avec un rapport compris entre 4 et 5 avec une épaisseur totale du fil profilé en T comprise entre 12 et 18 mm environ correspondant à des applications typiques.

L'épaisseur du fil profilé en T peut être plus faible, mais, de préférence, supérieure ou égale à 5 mm. Dans ce cas, l'épaisseur du fil profilé en U est réduite au minimum, tout en restant, de préférence, au moins égale à 1 mm.

Pour des épaisseurs de fil plus importantes, il est intéressant de maintenir l'épaisseur de la partie de base du fil profilé en U à une valeur relativement faible, par exemple de l'ordre de 1,5 à 3 mm, de sorte que le rapport desdites aires peut dépasser la valeur de 5 mentionnée ci-dessus.

Cette caractéristique est avantageuse dans la mesure où de par la disposition respective prévue selon l'invention des fils profilés en T et en U, c'est le fil profilé en T qui est amené à supporter la part la plus importante de la composante circonférentielle des efforts engendrés par la pression intérieure dans la conduite.

La configuration géométrique du fil profilé en T et du fil profilé en U est telle que, vue en section droite, ils présentent des surfaces extérieures circonférentielles du côté interne et du côté externe sensiblement parallèles à l'axe de la conduite flexible. C'est-à-dire que, dans une coupe longitudinale de la voûte de pression, la base interne du fil profilé en T et le bord externe de sa nervure centrale, ainsi que la face externe du fil profilé en U ainsi que sa face interne qui constitue une gorge élargie entre les nervures, présentent la forme d'une ligne droite parallèle à l'axe de la conduite flexible.

La conduite flexible étant réalisée de sorte que les deux nervures latérales d'un premier fil, de préférence le fil profilé en T, soit en contact avec la gorge correspondante du second fil profilé, de préférence la base interne du fil profilé en U, il existe un jeu radial initial, pratiquement au moins égal à 0,1 mm, entre les nervures latérales du second fil profilé et la gorge correspondante du premier fil profilé. Ce jeu radial initial est, de préférence, supérieur ou égal à 0,2 mm, et peut valoir, dans la pratique courante, de l'ordre de 3 à 5 % de l'épaisseur du fil profilé en T.

Dans ces conditions, lorsque la conduite flexible est mise en service et remplie de fluide sous pression, la résistance opposée par la voûte de pression à la composante circonférentielle des efforts dus à la pression, en tenant compte du rôle joué par les armures de traction, se répartit entre le fil profilé en T et le fil profilé en U. Dans le cas où les matériaux des fils profilés ont le même module d'Young, la composante circonférentielle est approximativement répartie en fonction des surfaces respectives de section droite des deux fils profilés. Il en résulte qu'il existe, dans la situation initiale de mise en service de la conduite flexible, un effort d'appui radial entre les nervures du premier fil profilé et les gorges en regard du second fil profilé. Lorsque la conduite flexible est utilisée dans des conditions dynamiques, la courbure de la conduite variant dans le temps, normalement à la période de la houle, il en résulte un déplacement relatif entre les deux fils profilés, dans le sens latéral des fils, c'est-à-dire dans le sens axial de la conduite flexible.

L'effort d'appui radial entraîne donc un état de contraintes alternées, de niveau relativement faible, qui se combine avec la contrainte statique de traction, orientée dans la longueur du fil et de valeur relativement élevée correspondant à la résistance à la composante circonférentielle de la pression. Il n'est pas évident, à priori, que l'état de fatigue ainsi créé soit compatible avec la durée de vie recherchée dans les applications visées, par exemple 20 ans. D'autre part, l'effort d'appui engendre des frottements et provoque l'usure progressive de la surface de l'un ou des deux fils en contact.

Selon la présente invention, la surface de la section du fil profilé en T est plus importante, et de préférence, plusieurs fois plus grande, que celle du fil profilé en U. Il en résulte que la partie de l'effort circonférentiel repris par le fil profilé en U, ainsi que l'effort d'appui radial, sont relativement réduits, en fonction du rapport des sections des deux fils.

L'usure progressive des surfaces des deux fils en appui provoque une légère augmentation du rayon d'enroulement du fil profilé en T et une légère réduction du rayon d'enroulement du fil profilé en U, en même temps que le rapprochement des axes d'inertie des deux fils.

Il a ainsi été trouvé que, progressivement, au fur et à mesure de l'usure des fils, la partie de l'effort circonférentiel reprise par le fil profilé en T augmente, la participation du fil profilé en U diminuant de façon proportionnellement plus rapide et pouvant, dans de nombreux cas, être remplacée au bout d'un certain temps par un léger effort de compression. Corrélativement, l'effort d'appui radial entre les fils diminue en même temps que l'effort circonférentiel dans le fil profilé en U. La découverte de cette propriété favorable a joué un rôle déterminant dans l'évaluation des avantages procurés par l'invention.

Une autre conséquence de l'usure au contact entre la nervure du premier fil profilé et la gorge correspondante du second fil profilé est que, par rapport à sa valeur initiale, le jeu radial entre la nervure du second fil profilé, de préférence le fil profilé en U, et la gorge du second fil profilé, diminue progressivement.

Selon la présente invention, ce jeu radial, à savoir le jeu radial de la seconde nervure doit subsister pendant toute la durée d'utilisation de la conduite flexible. Il a en effet été trouvé que si, du fait d'un jeu initial insuffisant par rapport à l'usure possible, une seconde zone d'appui radial apparaît au bout d'un certain temps entre la nervure du second fil et la gorge correspondante du premier fil, il en résulte alors l'apparition rapide de ruptures dans le fil profilé en U. Ceci a été attribué à la combinaison d'une part de la situation dans laquelle se trouve alors le fil profilé en U en appui en quatre points sur les deux spires adjacentes du fil profilé en T, les deux nervures du fil profilé en U et une nervure latérale de chacun des deux fils profilés en T étant en appui, et, d'autre part, de l'existence d'un moment de flexion dans le fil profilé en U qui a été découverte par ailleurs et qui est attribuée aux contraintes transversales alternatives de compression/traction créées dans la paroi interne ainsi qu'à l'extrémité de la nervure du fil profilé en U par les efforts de frottement au contact avec les surfaces en regard du fil profilé en T. Par contre, dans le cas où la valeur initiale du jeu radial de la seconde nervure est suffisante pour que ce jeu radial subsiste sans appui pendant la durée de vie de la conduite flexible, il a été trouvé que le fil profilé en U n'est pas sujet à rupture.

Dans un premier mode de réalisation, les caractéristiques du fil profilé en T et du fil profilé en U sont choisies de sorte que la conduite flexible présente deux phases successives de fonctionnement.

Au cours d'une première phase dans laquelle il existe un contact avec effort d'appui entre le fil profilé en T et le fil profilé en U, une partie des efforts circonférentiels est reprise par le fil profilé en U avec une pression de contact entre les deux fils profilés.

Ce contact entraîne des frottements et un début d'usure qui se produit aussi longtemps que, malgré un début de réduction d'épaisseur de l'une ou de l'autre des portées en appui, un certain effort d'appui existe entre les fils profilés en T et en U.

Les travaux de la société déposante ont montré, que, compte-tenu de la variation des contraintes et des déformations associées aux effets dynamiques, essentiellement l'action de la houle, l'usure atteint une amplitude maximale et finale faible, de l'ordre de quelques dixièmes de millimètre. Compte-tenu des dimensions des fils profilés et en particulier du fil profilé en T qui présente une section importante, la réduction d'aire de section résultante est extrêmement faible et en fait négligeable dans la pratique.

Au cours d'une deuxième phase de fonctionnement, le fil profilé en T et le fil profilé en U restent approximativement en contact, mais l'effort d'appui devient extrêmement faible, voire pratiquement négligeable. Plus précisément, l'effort d'appui reste égal au niveau en deça duquel il ne peut plus y avoir d'usure.

Il n'y a donc plus aucune usure des fils profilés et l'on constate une augmentation importante de durée de vie par rapport aux structures antérieurement connues, y compris celles associant un fil profilé en T et un fil profilé en U.

Selon l'invention, la section des fils étant stabilisée à une valeur très voisine de sa valeur initiale, et les efforts d'appui entre les fils profilés ayant disparu après une érosion régulière d'une mince pellicule de surface, on a pu constater que la voûte de pression ne présente aucun début de fissuration.

Dans un deuxième mode de réalisation, l'effort d'appui, tout en décroissant de façon continue, reste suffisant pour que l'usure se poursuive pendant toute la durée de vie de la conduite flexible, le taux d'usure allant en diminuant en même temps que l'effort d'appui, et devenant ainsi de plus en plus faible. Il a été trouvé que l'usure finale est faible, comme dans le premier mode, et est également de quelques dixièmes de mm, de sorte que, en particulier, le jeu radial de la seconde nervure subsiste sans appui, et ceci même lorsque l'usure atteint, dans le cas de fils épais, environ un millimètre.

A l'extérieur de la voûte de pression constituée par les fils profilés en T et en U se trouve l'armure de traction, une couche intermédiaire en matériau polymérique pouvant être disposée avantageusement entre la voûte et l'armure. L'armure de traction exerce, de façon connue, un effort de compression sur la voûte sous-jacente, effort dont il est tenu compte dans l'évaluation des efforts appliqués aux fils profilés en T et en U ainsi que des efforts d'appui entre fil profilé en T et fil profilé en U.

De préférence, les fils profilés en T et en U sont dimensionnés de manière que, à l'état enroulé, chaque fil profilé ayant deux appuis sur le fil de forme complémentaire et chaque spire de fil étant ainsi en appui simple sur chacune des deux spires adjacentes, la surface externe cylindrique du fil profilé en U a un diamètre égal ou légèrement inférieur à celle du fil profilé en T.

La voûte de pression selon l'invention peut, le cas échéant être complétée par une voûte de pression complémentaire posée sur elle et constituée d'un fil non agrafé spiralé avec un angle élevé, l'armure de traction étant disposée à l'extérieur de cette voûte complémentaire. De préférence, le fil non agrafé est de section rectangulaire à angles arrondis, et spiralé en sens opposé par rapport aux fils profilés de la voûte de pression, la surface externe du fil profilé en U étant légèrement en retrait par rapport à la face d'extrémité de la nervure centrale du fil profilé en T. Une gaine plastique intermédiaire peut éventuellement être disposée entre la voûte de pression et la voûte complémentaire en fils non agrafés.

La présente invention est applicable à la réalisation de conduites tubulaires flexibles du type "smooth bore", c'est-à-dire dans laquelle la gaine interne d'étanchéité est l'élément le plus interne de la conduite au contact duquel circule le fluide à transporter, et de conduites de type "rough bore" comportant à l'intérieur de la gaine d'étanchéité une carcasse métallique flexible telle qu'une structure de type feuillard métallique agrafé.

La présente invention présente des avantages remarquables :

1°) Performances mécaniques considérablement supérieures à celles des conduites flexibles de l'art antérieur, en particulier en termes de durée de vie. Les effets de fatigue et d'usure sont extrêmement réduits, et les phénomènes de fissuration ont disparu.

2°) Dans les applications dynamiques sévères, la contrainte moyenne dans la section du fil profilé peut atteindre une valeur voisine ou, à la limite, égale à la contrainte admissible en application statique, sans avoir à augmenter la section de fil et diminuer la contrainte comme cela peut être nécessaire avec les fils de l'art antérieur pour compenser les effets d'usure, de fatigue et de concentration de contrainte.

3°) Fabrication plus facile des fils profilés en T et en U, sans risque de dégradation du métal, en particulier du fait du formage des fils profilés. En outre, compte tenu des moyens de fabrication disponibles dans l'industrie, il est possible, dans la pratique, de réaliser des fils profilés d'épaisseur et de section plus importantes.

4°) Opération de fabrication de la conduite par spiralage des fils profilés de la voûte de pression rendue facile. Il est en effet possible de spiraler le fil profilé en T de la même façon qu'est spiralé le fil non agrafé d'une voûte de pression complémentaire. Cette opération est relativement aisée, le fil profilé en U formant agrafe étant posé par dessus le fil profilé en T sous tension, un peu comme un simple ruban.

Dans la présente description, il est indiqué que la voûte de pression est constituée par un fil profilé en T et un fil profilé en U, dans le but de simplifier la description. Il est clair que la voûte de pression selon l'invention peut, de même que la voûte de pression complémentaire, de façon en soi bien connue, être réalisée avec plusieurs fils profilés en T déposés en spires adjacentes, et plusieurs fils profilés en U en nombre égal aux fils profilés en T. Avantageusement, la voûte de pression comporte deux fils profilés en T et deux fils profilés en U, le pas de spiralage étant deux fois plus important que celui d'une voûte réalisée par un seul fil profilé en T et un seul fil profilé en U présentant les mêmes dimensions de section. Une telle structure permet en effet de doubler la vitesse de spiralage et de faciliter l'équilibrage de la spiraleuse, ainsi que de diviser par deux l'amplitude de l'espace libre entre deux fils profilés en T adjacents.

D'autres avantages et caractéristiques de l'invention apparaîtront à la lecture de la description qui suit d'un exemple de mise en oeuvre nullement limitatif en se référant au dessin annexé dans lequel :

- la figure 1 est une vue schématique d'un mode de réalisation de conduite tubulaire flexible selon l'invention,
- la figure 2 illustre une forme de réalisation de la voûte de pression de la conduite de la figure 1,
- les figures 3 et 4 sont des vues de détail illustrant des configurations possibles des composants de la voûte de pression de la conduite tubulaire flexible selon l'invention,
- les figures 5A et 5B illustrent des variantes de réalisation avec une voûte de pression complémentaire et la figure 6 est une vue de détail d'une variante de réalisation.

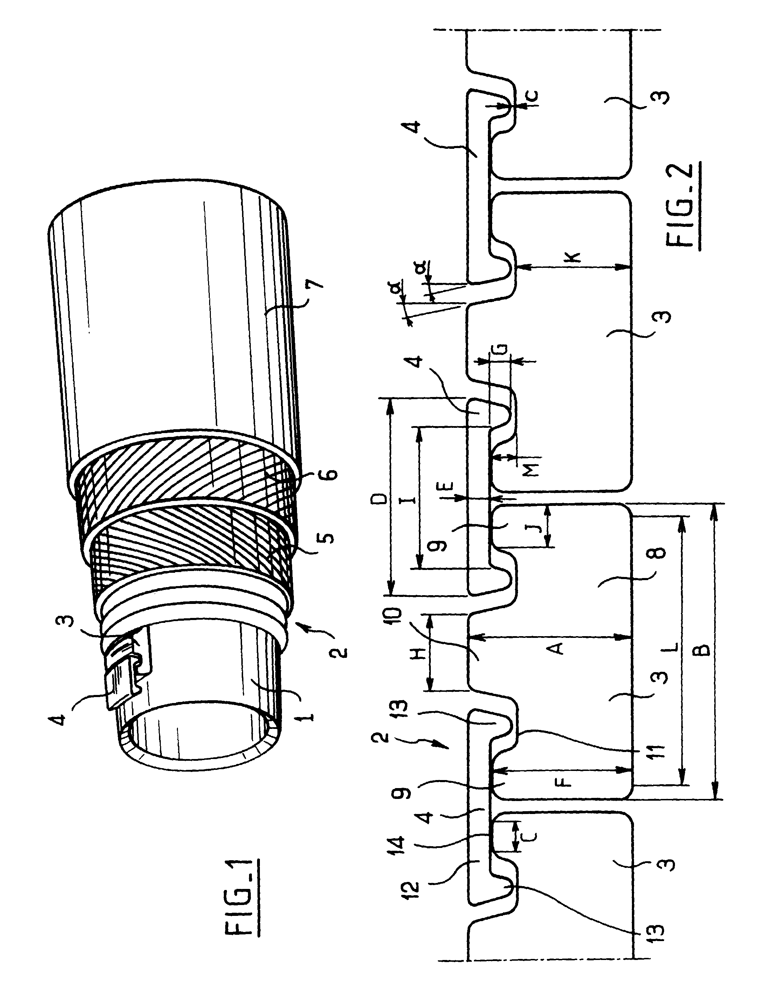

La conduite tubulaire flexible illustrée à la figure 1 est de type "smooth bore" et comprend de l'intérieur vers l'extérieur une gaine d'étanchéité en matière plastique 1, notamment en polyamide, en polymère fluoré, ou en polyéthylène réticulé, une voûte de pression 2 dont la structure va être décrite plus en détail ci-après formée par spiralage de deux fils profilés, l'un en T, 3, l'autre en U, 4, une armure de traction constituée de deux nappes croisées de fils métalliques 5, 6, et une gaine extérieure d'étanchéité en matière plastique 7. Une gaine intermédiaire, non représentée, peut le cas échéant être prévue entre la voûte de pression 2 et la première 5 des nappes de l'armure de traction.

Dans une variante non représentée, la voûte 2 peut comporter deux fils profilés en T et deux fils profilés en U, le pas des hélices formées par les fils profilés étant alors deux fois plus important.

L'invention n'est pas limitée à une telle conduite de type "smooth bore" et peut être mise en oeuvre avec une conduite de type "rough bore" avec mise en place à l'intérieur de la gaine 1 d'une nappe de feuillard agrafé enroulé hélicoïdalement.

On se réfère maintenant à la figure 2 qui illustre un mode de réalisation de la voûte de pression 2 formée par spiralage à spires non jointives de fils profilés 3 et 4 de section en T et respectivement en U.

Le fil profilé en T 3 présente une partie de base 8 de section sensiblement rectangulaire complétée à ses extrémités latérales par deux nervures 9 et dans sa partie centrale par une nervure centrale de section sensiblement trapézoïdale 10.

Entre chacune des nervures latérales 9 et la nervure centrale 10 est formée une gorge dont la paroi de fond est constituée par la surface 11 de la partie de base 8.

Le fil profilé 3 est enroulé dans la disposition illustrée, avec les nervures 9 et 10 faisant saillie en direction de l'extérieur de la conduite tubulaire flexible, c'est-à-dire radialement à l'opposé de l'axe longitudinal de la conduite, non représenté sur la figure 2.

Le fil profilé 4 présente une partie de base 12 aux extrémités latérales desquelles sont réalisées des nervures 13. Ces nervures 13 sont dirigées vers l'axe longitudinal de la conduite.

Comme on le voit sur la figure 2, les flancs latéraux des nervures centrales 10 du fil profilé en T,3 et les flancs extérieurs des nervures 13 du fil profilé en U,4, sont inclinés d'un même angle $\alpha$ par rapport à un plan perpendiculaire à l'axe de la conduite tubulaire flexible, cet angle $\alpha$ pouvant dans la pratique être compris entre 0 et 30°.

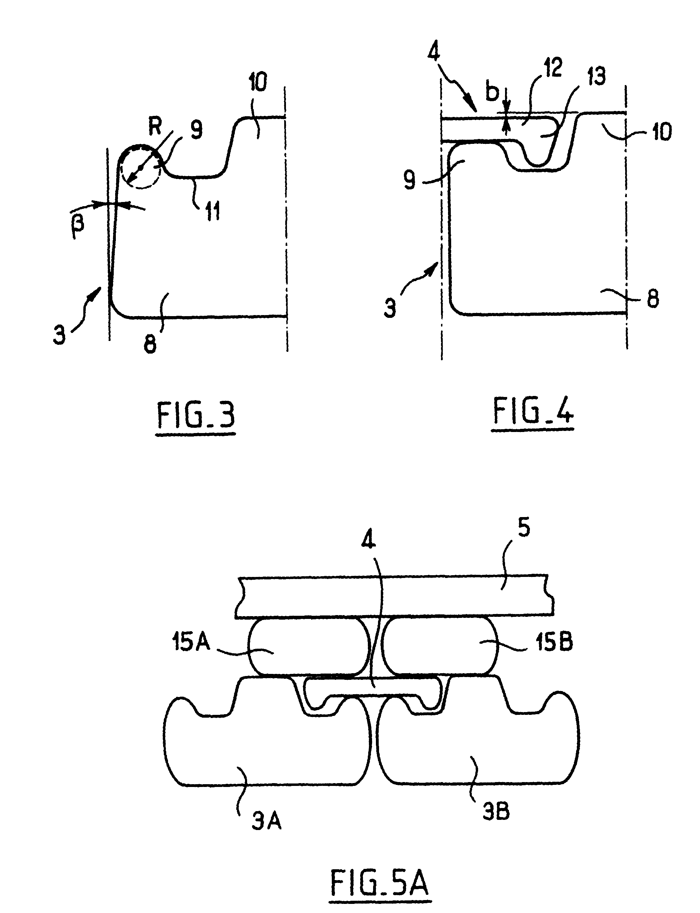

Les flancs latéraux d'extrémité de la partie de base 8 du fil profilé en T 3 peuvent être avantageusement, comme illustré à la figure 2, perpendiculaires à l'axe de la conduite tubulaire flexible ou comme dans la variante illustrée à la figure 3, former avec celui-ci un angle $\beta$ qui dans la pratique est inférieur à 10°.

Ces flancs latéraux peuvent, en section droite du fil être droits comme illustré ou le cas échéant, légèrement incurvés, comme illustré aux figures 5A et 5B.

Comme illustré notamment sur la figure 2, il est possible par un dimensionnement particulier d'assurer lors de la réalisation de la voûte de pression un contact entre les nervures latérales 9 du profilé en T, 3, avec le fil profilé en U, 4, plus précisément avec la surface 14 de la partie de base de ce fil profilé en U qui constitue le fond élargi et de préférence plat de la gorge ménagée entre les nervures latérales 13 de celui-ci.

Comme expliqué précédemment, les efforts d'appui à l'endroit des surfaces en contact sont appelés à disparaître plus ou moins rapidement en cours d'utilisation. Dans certains cas, lorsque les efforts d'appui au début de la mise en exploitation de la conduite sont particulièrement faibles, il n'est pas exclu qu'il y ait seulement réduction progressive des efforts d'appui, et par conséquent du taux d'usure, sans que se manifeste le passage à une deuxième phase avec efforts d'appui extrêmement faible nettement différenciée par rapport à la première phase où les efforts d'appui sont relativement plus importants.

On a désigné sur la figure 2 par :

A, la hauteur du profilé en T,3, déterminée par la distance entre la face inférieure de la partie de base 8 et la surface supérieure d'extrémité de la nervure centrale 10.

B, la largeur du profilé en forme de T,3.

C, la largeur au sommet des nervures latérales 9 du profilé en T,3 dans l'hypothèse où cette portée est cylindrique étant entendu que dans le mode de réalisation illustré à la figure 3, elle peut être incurvée, caractérisée par un cercle osculateur de rayon R.

D, la largeur de la partie de base du profilé en U,4.

E, l'épaisseur du profilé en U,4, dans sa partie centrale constituée par la gorge 14.

F, la hauteur des nervures latérales 9 du profilé en T,3 mesurée à partir de la face inférieure de sa partie de base 8.

G, la hauteur des nervures latérales 13 du profilé en U,4, mesurée à partir de la surface de fond de gorge 14.

H, la largeur au sommet de la nervure centrale du profilé en T,3.

I, la largeur de la surface de fond de gorge 14 du profilé en U,4.

J, la largeur des nervures latérales 9 du fil profilé en T,3.

K, la hauteur de la partie de base 8 du fil profilé en T, 3, c'est-à-dire la distance entre la face inférieure de la partie de base et la surface 11 de fond des gorges latérales du fil profilé en T avec de préférence : rapport entre K et A : KIA égal ou supérieur à 0,4 et avantageusement égal ou supérieur à 0,5.

L, la largeur de la partie centrale sensiblement plane de la surface de base du fil profilé en T,4, orientée vers l'axe X et

M, la hauteur des nervures latérales 9 du fil profilé en T,3.

c, l'espace entre les nervures 13 du fil profilé en U,4, et les surfaces 11 de fond de gorge du fil profilé en T, 3.

Cet espace constitue le jeu radial entre les nervures latérales du premier fil, ici, de façon avantageuse, le fil profilé en T, et la gorge correspondante du second fil, ici le fil profilé en U, la valeur initiale de ce jeu radial étant de l'ordre de un ou quelques dixièmes de millimètre.

Il est ainsi possible, par le calcul et/ou des essais sur modèle ou prototype de déterminer, pour chaque cas d'application, les dimensions des fils profilés en T et en U, et en particulier l'espace c, de façon à ce que le jeu radial de la première nervure, c'est-à-dire des nervures latérales du premier fil, subsiste pendant toute la durée de vie prévue.

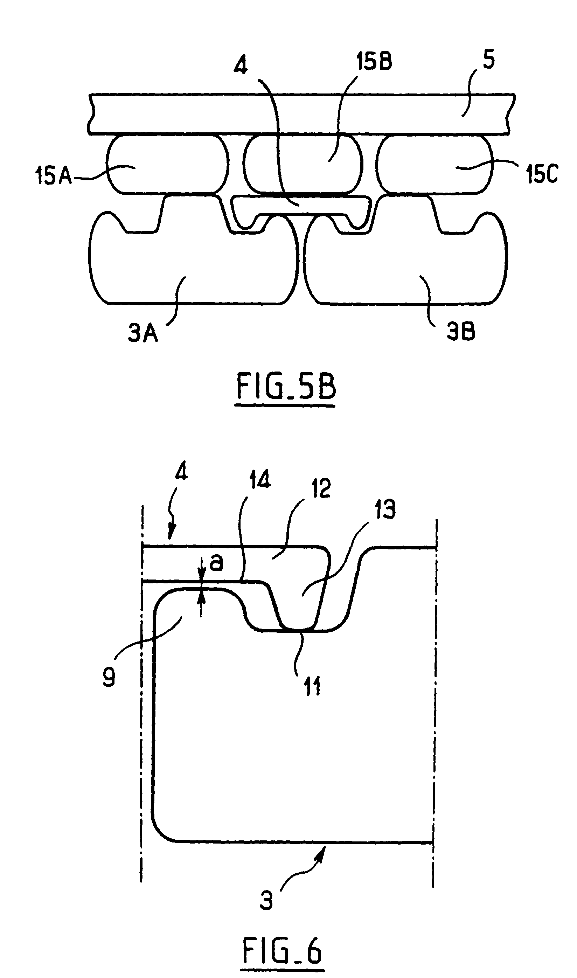

L'épaisseur de la voûte 2 est déterminée de préférence par l'épaisseur A du fil profilé en T,3, dans sa partie centrale. Cette valeur peut typiquement correspondre également à la somme des valeurs E et F à laquelle s'ajoute le cas échéant, la distance a dans la variante correspondant à la figure 6, cette valeur étant égale à la valeur A. La figure 6 illustre le cas où le fil profilé en U est le premier fil tel que ses nervures latérales sont en appui sur les gorges correspondantes du fil profilé en T qui constitue le second fil.

Cette variante selon la figure 6 est, en principe moins intéressante que la variante selon la figure 2, dans la mesure où elle implique une augmentation des contraintes de flexion alternatives créant des effets de fatigue dans le fil profilé en U.

Dans la variante de réalisation illustrée à la figure 4, il est prévu une distance b entre la face d'extrémité de la nervure centrale 10 du fil profilé en T,3 et la surface extérieure de la partie de base du fil profilé en U,4.

La distance b peut être dans la pratique de l'ordre de quelques dixièmes de millimètre.

La variante illustrée à la figure 5 est notamment intéressante dans le cas où la conduite tubulaire flexible comporte autour de la voûte de pression 2 une nappe de fils non agrafés constituant une voûte de pression complémentaire.

Une telle variante avec voûte de pression complémentaire, couramment appelée frette est illustré aux figures 5A et 5B. Le fil 15 de la frette est spiralé en sens inverse des fils profilés en T, 3, et en U, 4, de la voûte. Dans sa longueur, le fil profilé en U,4 peut se trouver recouvert soit par deux fils 15A et 15B de la frette dans le cas du spiralage de deux fils parallèles, ou deux spires adjacentes 15A et 15B du fil de frette, dans le cas du spiralage à un fil, comme illustré figure 5A, soit par un fil tel que 15B, comme illustré figure 5B. En particulier dans la situation illustrée à la figure 5B, il a été trouvé qu'une faible valeur de la distance radiale b est suffisante pour empêcher le fil de frette, tel que 15B dans la figure 5B, de prendre appui sur le fil profilé en U,4, et d'augmenter l'effort d'appui entre le fil profilé en U et le fil profilé en T, ce qui aurait des conséquences dommageables sur la résistance et la durée de vie de la voûte de pression.

Les valeurs des hauteurs G et M sont de préférence chacune supérieure ou égale à 0,5 mm et en particulier supérieure à 1 mm.

La largeur C est de préférence supérieure ou égale à 1 mm et peut être typiquement de 2 à 3 mm.

Dans la forme de réalisation de la figure 3, le rayon R est de préférence supérieur ou égal à 0,5 mm, et en particulier supérieur ou égal à 1 mm.

Le rapport des valeurs B et A est de préférence compris entre 1,25 et 2 et en particulier compris entre 1,45 et 1,65.

Dans le sens axial de la conduite tubulaire flexible, on a de préférence

$$D + H \leq B$$

et

$$I - 2 J < 5 \text{ mm et de préférence} < 2,5 \text{ mm.}$$

avec de préférence $1,2 \text{ mn} \leq B - L \leq 2,5 \text{ mm.}$

De préférence, la surface interne 14 de la gorge du fil profilé en U,4 étant plane, la hauteur du fil profilé en U, 4, dans sa partie centrale est supérieure ou égale à 1 mm, avantageusement supérieure ou égale à 2 mm, des résultats intéressants étant obtenus avec une hauteur entre 2 et 3 mm.

Exemples de prototypes essayés :

| | Exemples selon l'invention | | Exemple comparatif |
|---|---|---|---|
| | Proto 1 | Proto 2 | Proto 3 |
| Conduite flexible | | | |
| Diamètre interne | 6 pouces (152,4 mm) | 10 pouces (254 mm) | 6 pouces (152,4 mm) |
| Pression interne maximale | 370 bars | 425 bars | 281 bars |
| Voûte de pression Fil profilé en T | | | |
| - Hauteur A<br>- Largeur B<br>- Hauteur des | 14 mm<br>25 mm | 14 mm<br>25 mm | 10 mm<br>19,4 mm |

(suite)

| | Exemples selon l'invention | | Exemple comparatif |
|---|---|---|---|
| Voûte de pression Fil profilé en T | | | |
| nervures F<br>- Matériau | 11 mm<br>Acier au carbone<br>$R_m$ = 722 MPa | 11 mm<br>Acier au carbone<br>$R_m$ = 850 MPa | 8 mm<br>Acier au carbone<br>$R_m$ = 877 MPa<br><br>dureté HV (20kg) = 270 à 320 |
| Fil profilé en U | | | |
| - Hauteur centrale E<br>- Largeur D<br>- Hauteur des<br>nervures G<br>- Matériau | 2,9 mm<br>17,8 mm<br><br>1,9 mm<br>Acier au carbone<br>$R_m$ = 860 MPa | 2,3 mm<br>17,6 mm<br><br>1,9 mm<br>Acier au carbone<br>$R_m$ = 860 MPa | 1,8 mm<br>13,2 mm<br><br>2,5 mm<br>Acier au carbone<br><br>Dureté HV (20kg) = 90 à 120 |
| Jeux radiaux | | | |
| 1°) Appui radial entre nervures latérales du fil profilé en T et portée centrale du fil profilé en U | | | |
| 2°) Jeu radial c entre nervures du fil profilé en U et gorges du fil profilé en T | 0,3 à 0,5 mm | 0,3 à 0,5 mm | zéro |
| 3°) Dépassement b de la nervure centrale du fil profilé en T par rapport à la surface extérieure du fil profilé en U | nominal = 0,1 mm<br><br><br>réel = 0,2 mm<br><br><br>(tolérances sur les cotes des fils, le fil en U dépassant légèrement) | nominal = 0,7 mm<br><br><br>réel = 0,4 mm | 0,2 mm |
| Voûte de pression complémentaire | | | |
| épaisseur du fil | Néant | 7,5 mm | Néant |

Résultats des essais

Prototype 1

- pression interne maintenue à 369 bars
- traction axiale égale à 793 kN
- conditions dymamiques (écart angulaire imposé au flexible, variant cycliquement) correspondant aux conditions typiques de la mer du Nord (très sévères) pendant 20 ans.

La conduite flexible a resisté à un nombre de cycles correspondant à une durée de vie de 20 ans.
L'expertise des fils a montré une légère usure, régulière sans fissuration.

Prototype 2

- pression interne maintenue à 425 bars
- traction axiale égale à 800 kN

- conditions dynamiques correspondant, comme pour le prototype 1, à la mer du Nord sur une durée de 20 ans.

Excellents résultats, confirmés par l'expertise des fils, comme pour le prototype 1.

Prototype 3

- pression interne = 277 bars
- traction axiale = 850 kN
- conditions dynamiques correspondant, comme pour les deux autres
- conditions dynamiques correspondant, comme pour les deux autres prototypes, à la mer du Nord sur une durée de 20 ans.

Rupture du fil en T apparue un peu avant la limite de durée prévue de 20 ans ayant entraîné une fuite mettant la conduite flexible hors service.

Le résultat insuffisant sur ce prototype 3 s'explique par le fait qu'il y avait double contact dans chaque zone d'agrafage, à la fois aux nervures du fil profilé en U et aux nervures du fil profilé en T, ceci étant aggravé par le fait que l'acier du fil profilé en U était beaucoup trop mou par rapport au fil profilé en T.

D'une façon générale, les fils profilés en T et en U peuvent être réalisés en n'importe quel métal, acier ou autres, envisageables pour les armatures d'une conduite flexible. En particulier, on peut utiliser le même métal pour les deux fils, avec la même nuance ou des nuances voisines.

Dans le cas typique de fils en acier au carbone, la limite à la rupture Rm du fil profilé en U est, de préférence supérieure à une valeur égale à la valeur Rm du fil profilé en T diminuée de 200 MPa.

$$Rm_U \geq Rm_T - 200 \text{ MPa}$$

et avantageusement supérieure de 100 à 200 MPa à la valeur Rm du fil profilé en T

$$Rm_U = Rm_T + 100 \text{ à } 200 \text{ MPa.}$$

Bien que l'invention ait été décrite en liaison avec des modes de réalisation particuliers, il est bien évident qu'elle n'y est nullement limitée et qu'on peut lui apporter diverses variantes et modifications sans pour autant sortir de son cadre tel que défini par les revendications.

**Revendications**

1. Conduite tubulaire flexible, en particulier pour le transport de fluides sous pression, comportant une gaine interne d'étanchéité (1), une armure de traction (5,6) constituée par au moins deux nappes croisées de fils, une armure de résistance à la pression, dite voûte de pression (2) et constituée par l'enroulement en hélice sous un angle proche de 90° par rapport à l'axe de la conduite tubulaire flexible d'au moins une paire de fils profilés métalliques agrafables, l'un des fils profilés présentant une section en T (3) comportant une partie de base munie à ses extrémités latérales de nervures en relief et d'une nervure centrale en relief dont le sommet se trouve à une plus grande distance par rapport à la partie de base que les sommets des nervures latérales, l'autre fil profilé présentant une section en U (4) comportant une partie de base munie à ses extrémités latérales de nervures en relief, et une gaine externe (7) de protection, les nervures du fil profilé en T (3) étant orientées vers l'extérieur de la conduite tubulaire flexible, et les nervures du fil profilé en U (4) étant orientées en direction de l'axe de la conduite tubulaire flexible, caractérisée par le fait que l'aire de la section droite du fil profilé en T (3) est sensiblement supérieure à l'aire de la section droite du fil profilé en U (4), et que, dans chaque zone d'agrafage latéral constituée, d'une part, par une nervure latérale (13), du fil profilé en U (4) engagée dans une gorge latérale du fil profilé en T (3) et d'autre part par une nervure latérale(9) du fil profilé en T en regard de la partie de base (12) du fil profilé en U et entre les deux nervures (13) de ce fil profilé en U, il y a à la fois contact entre la nervure latérale d'un premier des deux profilés et le second fil profilé et un jeu radial entre la nervure latérale du second fil profilé et le premier fil profilé.

2. Conduite tubulaire flexible selon la revendication 1 caractérisée par le fait que ledit premier fil profilé est le fil profilé en T, (3) les deux nervures latérales (9) de ce fil profilé étant en contact avec la surface en regard (14) de la partie de base (12) du fil profilé en U (4) qui constitue le fond élargi, et de préférence plat, de la gorge située entre les nervures latérales (13) de ce fil profilé en U, et les deux nervures latérales du fil profilé en U étant à distance, avec un certain jeu radial, par rapport aux gorges correspondantes du fil profilé en T.

3. Conduite tubulaire flexible selon la revendication 1 ou 2 caractérisée par le fait le rapport desdites aires des sections droites des fils profilés est supérieur ou égal à 2 et de préférence supérieur ou égal à 3.

**Patentansprüche**

1. Flexible Rohrleitung, insbesondere für den Transport von unter Druck stehenden Fluida,

mit einem inneren Dichtungsmantel (1),
mit einer Zugbewehrung (5, 6) aus wenigstens zwei sich kreuzenden Drahtlagen,
mit einer als Druckgewölbe (2) bezeichneten druckfesten Bewehrung, die durch schraubenförmiges Umwikkeln wenigstens eines Paares von verhakbaren Metallprofildrähten unter einem Winkel von nahezu 90° relativ zu der Achse der flexiblen Rohrleitung gebildet ist, wobei einer (3) der Profildrähte einen T-förmigen Querschnitt besitzt mit einem Basisteil, das an seinen seitlichen Enden mit hervorstehenden Rippen und mit einer zentralen hervorstehenden Rippe ausgestattet ist, deren Scheitel einen größeren Abstand von dem Basisteil hat als die Scheitel der seitlichen Rippen, während der andere Profildraht (4) einen U-förmigen Querschnitt besitzt mit einem Basisteil, das an seinen seitlichen Enden mit hervorstehenden Rippen ausgestattet ist, sowie mit einem äußeren Schutzmantel (7),
wobei die Rippen des T-Profildrahts (3) in Richtung auf die Außenseite der flexiblen Rohrleitung orientiert sind und die Rippen des U-Profildrahts (4) in Richtung auf die Achse der flexiblen Rohrleitung orientiert sind,

**dadurch gekennzeichnet,**

daß die Querschnittsfläche des T-Profildrahts (3) merklich größer ist als die Querschnittsfläche des U-Profildrahts (4)
und daß in jeder seitlichen Verhakungszone, die einerseits von einer in eine seitliche Kehle des T-Profildrahts (3) eingreifenden seitlichen Rippe (13) des U-Profildrahts (4) und andererseits von einer dem Basisteil (12) des U-Profildrahts gegenüber und zwischen den beiden Rippen (13) dieses U-Profildrahts liegenden seitlichen Rippe des T-Profildrahts gebildet wird, sowohl Berührung zwischen der seitlichen Rippe eines ersten der beiden Profildrähte und dem zweiten Profildraht als auch ein radiales Spiel zwischen der seitlichen Rippe des zweiten Profildrahts und dem ersten Profildraht vorhanden ist.

2. Flexible Rohrleitung nach Anspruch 1, dadurch gekennzeichnet, daß der genannte erste Profildraht der T-Profildraht (3) ist, wobei die beiden seitlichen Rippen (9) dieses Profildrahts mit der gegenüberliegenden Fläche (14) des Basisteils (12) des U-Profildrahts (4) in Berührung stehen, die den verbreiterten und vorzugsweise flachen Boden der Kehle bildet, die zwischen den seitlichen Rippen (13) dieses U-Profildrahts liegt, und wobei die beiden seitlichen Rippen des U-Profildrahts mit einem gewissen radialen Spiel Abstand von den korrespondierenden Kehlen des T-Profildrahts haben.

3. Flexible Rohrleitung nach Anspruch 1 oder 2, dadurch gekennzeichnet, daß das Verhältnis der genannten Querschnittsflächen der Profildrähte größer oder gleich 2, vorzugsweise größer oder gleich 3, ist.

**Claims**

1. A flexible tubular pipe, in particular for transporting fluids under pressure, the pipe comprising an internal leakproof sheath (1), traction armoring (5, 6) constituted by at least two crossed layers of wires, pressure-withstanding armoring referred to as a pressure vault and constituted by helically winding at least one pair of interlockable metal section wires at an angle close to 90° relative to the axis of the flexible tubular pipe, one of the section wires (3) having a T-shaped section including a base portion provided with projecting ribs at its lateral extremities and a projecting central rib whose end is further from the base portion than are the ends of the lateral ribs, the other section wire (4) having a U-shaped section comprising a base portion having projecting ribs at its lateral extremities, and an outer protective sheath, the ribs of the T-section wire (3) being directed towards the outside of the flexible pipe and the ribs of the U-section wire (4) being directed towards the axis of the flexible pipe, characterized by the fact that the area of the section of the T-section wire (3) is substantially greater than the area of the section of the U-section wire (4), and that in each lateral interlock zone constituted firstly by a lateral rib (13) of the U-section wire (4) engaged in a lateral groove of the T-section wire (3), and secondly by a lateral rib (9) of the T-section wire facing the base portion (12) of the U-section wire between the two ribs (13) of said U-section wire, there is both contact between the lateral rib of a first of the two section wires and the second section wire, and radial clearance between the lateral rib of the second section wire and the first section wire.

2. A flexible pipe according to claim 1, characterized by the fact that said first section wire is the T-section wire (3), the two lateral ribs (9) of said wire being in contact with the facing surface (14) of the base portion (12) of the U-section wire (4) which constitutes the wide, and preferably flat bottom of the groove situated between the lateral ribs (13) of said U-section wire, and the two lateral ribs of the U-section wire being distant from the corresponding grooves of the T-section wire, with a certain amount of radial clearance.

3. A flexible pipe according to claim 1 or 2, characterized by the fact that the ratio of said areas of the sections of the section wires is greater than or equal to 2, and preferably greater than or equal to 3.

EP 0 796 404 B1

FIG.1

FIG.2

12

FIG.3

FIG.4

FIG.5A

FIG.5B

FIG.6

14